# EUROPEAN PATENT SPECIFICATION

(11) **EP 4 190 459 B1**
(45) Date of publication and mention of the grant of the patent: **02.09.2026**
(21) Application number: 21882500.8
(22) Date of filing: 22.09.2021
(51) Int. Cl.: B09B 5/00, B29B 17/02

(54) **METHOD FOR RECOVERING PLASTIC MATERIAL FROM USED NONWOVEN FABRIC PRODUCT WHICH CONTAINS USED ABSORBENT ARTICLE**
VERFAHREN ZUR RÜCKGEWINNUNG VON KUNSTSTOFFMATERIAL AUS GEBRAUCHTEM VLIESSTOFFPRODUKT MIT GEBRAUCHTEM SAUGFÄHIGEM ARTIKEL
PROCÉDÉ DE RÉCUPÉRATION DE LA MATIÈRE PLASTIQUE D'UN PRODUIT TEXTILE NON TISSÉ USAGÉ QUI CONTIENT UN ARTICLE ABSORBANT USAGÉ

(30) Priority: 20.10.2020 JP 2020176171
(43) Date of publication of application: 07.06.2023
(73) Proprietor: Unicharm Corporation, Shikokuchuo-shi, Ehime 799-0111 (JP)
(72) Inventor: KONISHI, Takayoshi, Kanonji-shi, Kagawa 769-1602 (JP); HIRAOKA, Toshio, Kanonji-shi, Kagawa 769-1602 (JP); ISHIKAWA, Yoshihide, Kanonji-shi, Kagawa 769-1602 (JP); KURITA, Noritomo, Kanonji-shi, Kagawa 769-1602 (JP)
(74) Representative: Dolleymores
(86) International application number: PCT/JP2021/034870
(87) International publication number: WO 2022/085359

(56) References cited:
- WO-A1-2016/103985
- WO-A1-2018/100865
- WO-A1-2018/179617
- JP-A- 2011 056 490
- JP-A- 2014 103 864
- JP-A- 2016 131 956
- JP-A- 2018 171 589

## Description

### FIELD

The present invention relates to a method of recovering a plastic material from a used nonwoven fabric product including a used absorbent article.

### BACKGROUND

A method of recovering a plastic material from a used nonwoven fabric product including a used absorbent article has been known. For example, Patent Literature 1 (Japanese Unexamined Patent Publication No. 2018-171589) discloses a method of recovering constituent members from a used absorbent article. This method is a method of recovering a film and an absorbent material which are the constituent members from the used absorbent article. This method includes a pretreatment step of swelling a used absorbent article with water, a decomposition step of decomposing the used absorbent article into at least a film and an absorbent material Aby physically impacting the swollen used absorbent article, and a separation step of separating the decomposed film and absorbent material.

### [CITATION LIST]

### [PATENT LITERATURE]

Patent Literature 1: Japanese Unexamined Patent Publication No. 2018-171589 WO2018/179617 A1 and JP2016 131956 A disclose methods for recycling used absorbent articles. JP2011 056490 A discloses a plastic material derived from a used absorbent article.

### SUMMARY

### [TECHNICAL PROBLEM]

In Patent Literature 1, in the separation step, a plastic material such as a film or nonwoven fabric and an absorbent material such as a superabsorbent polymer and pulp fibers are separated from each other. However, it is difficult to completely separate the absorbent material from the plastic material, and it is inevitable that a certain amount of the absorbent material remains in the separated plastic material, that is, a certain amount of impurities is contained in the plastic material. Therefore, reuse of such a plastic material has been limited to applications in that a certain amount of impurities may be contained, such as solid fuel.

The same also applies to a case where other nonwoven fabric products such as used medical gowns, medical caps, or masks are recovered together with the used absorbent article and a plastic material is recovered from these used nonwoven fabric products.

The present disclosure provides a method of recovering a plastic material from a used nonwoven fabric product including a used absorbent article, the method being capable of suppressing impurities of the recovered plastic material, and a plastic material having suppressed impurities.

### [SOLUTION TO PROBLEM]

There is provided a method of recovering a plastic material from a used nonwoven fabric product including a used absorbent article, in which the used nonwoven fabric product includes a plastic material and the used absorbent article includes a superabsorbent polymer and pulp fibers, the method comprising:
a primary separation step of separating the superabsorbent polymer and the pulp fibers from a mixture of the plastic material, the superabsorbent polymer, and the pulp fibers obtained by decomposing the used nonwoven fabric product, in an inactivation aqueous solution; and
a secondary separation step of recovering the plastic material by separating the superabsorbent polymer and the pulp fibers remaining without being separated in the primary separation step from the plastic material by applying a physical impact while spraying an oxidizing agent aqueous solution on the mixture in an air.

The present disclosure also provides use of a plastic in plastic to oil conversion in accordance with claim 9.

### [ADVANTAGEOUS EFFECT OF THE INVENTION]

According to the method of the present invention, a method of recovering the plastic material from the used nonwoven fabric product including the used absorbent article, the method being capable of suppressing impurities of the recovered plastic material, and the plastic material having suppressed impurities can be provided.

### BRIEF DESCRIPTION OF DRAWINGS

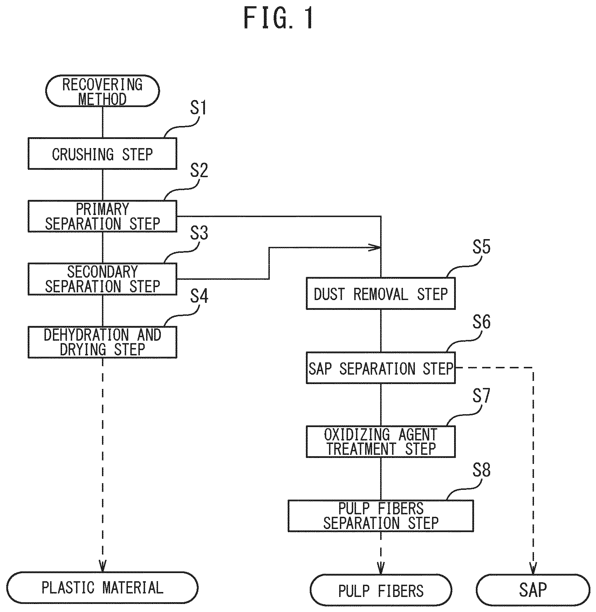

FIG. 1 is a flow chart illustrating a method of recovering a plastic material from a used nonwoven fabric product including a used absorbent article according to an embodiment.

### DESCRIPTION OF EMBODIMENTS

The present disclosure relates to the following.

A method of recovering a plastic material from a used nonwoven fabric product including a used absorbent article, in which the used nonwoven fabric product includes a plastic material and the used absorbent article includes a superabsorbent polymer and pulp fibers, the method comprising:
a primary separation step of separating the superabsorbent polymer and the pulp fibers from a mixture of the plastic material, the superabsorbent polymer, and the pulp fibers obtained by decomposing the used nonwoven fabric product, in an inactivation aqueous solution; and
a secondary separation step of recovering the plastic material by separating the superabsorbent polymer and the pulp fibers remaining without being separated in the primary separation step from the plastic material by applying a physical impact to the mixture while spraying an oxidizing agent aqueous solution on the mixture in an air.

In the present method, firstly, in the primary separation step, most of the superabsorbent polymer and the pulp fibers are separated from the mixture of the plastic material, the super absorbent polymer, and the pulp fibers, while inactivating, dehydrating, and suppressing swelling of the superabsorbent polymer with an inactivation aqueous solution. In the secondary separation step, the remaining superabsorbent polymer and pulp fibers are separated from the plastic material while applying a physical impact to the mixture while spraying an oxidizing agent aqueous solution on the mixture in the air, thereby recovering the plastic material.

As described above, in the secondary separation step, the oxidizing agent aqueous solution is sprayed on the mixture, which makes it possible to decompose at least a part of a surface of the superabsorbent polymer which remains in the mixture. Therefore, the superabsorbent polymer attached to the plastic material and the pulp fibers attached through the superabsorbent polymer can be easily removed from the plastic material. Also, the mixture can be washed with the oxidizing agent aqueous solution to sterilize, disinfect, and deodorize the mixture. In addition, the physical impact is applied to the mixture not in water (solution), but in the air, which makes it possible for the physical impact to be directly applied to the plastic material, the superabsorbent polymer, and the pulp fibers. Accordingly, the superabsorbent polymer and the pulp fibers attached to the plastic material can be easily detached from the plastic material. Therefore, these synergistic effects make it possible to easily separate the superabsorbent polymer and the pulp fibers from the mixture (the plastic material), which makes it possible to suppress the impurities in the obtained plastic material. Thus, the applications of the reuse of the plastic material can be expanded.

The oxidizing agent aqueous solution is an aqueous solution containing at least one of ozone, chlorine dioxide, peracetic acid, sodium hypochlorite, and hydrogen peroxide.

In the present method, the oxidizing agent aqueous solution is an aqueous solution containing at least one of ozone, chlorine dioxide, peracetic acid, sodium hypochlorite, and hydrogen peroxide. Accordingly, a surface of the superabsorbent polymer remaining in the mixture can be more appropriately decomposed, and the superabsorbent polymer remaining in the mixture and the pulp fibers attached to the superabsorbent polymer can be more easily removed from the plastic material. Also, the mixture can be more appropriately sterilized, disinfected, and deodorized.

The method may further include a crushing step of crushing the used nonwoven fabric product in an inactivation aqueous solution, wherein
the primary separation step includes a step of separating the superabsorbent polymer and the pulp fibers from the mixture in the used nonwoven fabric product crushed in the crushing step.

In the present method, before the primary separation step, the used nonwoven fabric product in the inactivation aqueous solution is crushed to a predetermined size, thereby crushing the plastic material, the super absorbent polymer, and the pulp fibers to a predetermined size. That is, the plastic material, the superabsorbent polymer, and the pulp fibers can be set to have a size, with which the separation is easily performed in the primary separation step and the secondary separation step, while inactivating, dehydrating, and suppressing swelling of the superabsorbent polymer in the inactivation aqueous solution. Therefore, the superabsorbent polymer and the pulp fibers can be more easily separated from the mixture (the plastic material).

In the primary separation step,
the inactivation aqueous solution is an acidic aqueous solution, and
the superabsorbent polymer and the pulp fibers are separated from the mixture while a pH of the acidic aqueous solution is maintained within a predetermined range.

In the present method, in the primary separation step, the inactivation aqueous solution is an acidic aqueous solution, and the superabsorbent polymer and the pulp fibers are separated from the mixture while maintaining the pH of the acidic aqueous solution within a predetermined range. Accordingly, in the primary separation step, most of the superabsorbent polymer and the pulp fibers are separated from the mixture, while more reliably inactivating, dehydrating, and suppressing swelling of the superabsorbent polymer with the inactivation aqueous solution. Therefore, the amount of the superabsorbent polymer and the pulp fibers which are the target to be separated in the secondary separation step can be decreased, which makes it possible to more easily separate the superabsorbent polymer and the pulp fibers from the mixture (the plastic material).

Physical impact is applied to the mixture by a collision of a rotating blade in an impeller which agitates the mixture in the air.

In the present method, the physical impact is applied to the mixture by the collision of a rotating blade on an impeller that agitates the mixture in air. Accordingly, the physical impact can be more reliably applied to the mixture in the air. Therefore, the superabsorbent polymer remaining in the mixture and the pulp fibers attached to the superabsorbent polymer can be more easily removed from the plastic material.

The primary separation step is performed by one of two primary separation devices connected in parallel.

In a primary separation device which performs the primary separation step, clogging of a material to be separated may occur because it is an initial separation. Accordingly, in the present method, the primary separation step is performed by one of two primary separation devices connected in parallel. Therefore, for example, in a case where maintenance is required for one primary separation device during an operation, the one primary separation device is stopped and the other primary separation device is operated, which makes it possible to continuously perform the present method without temporarily stopping the operation. Thus, the plastic material having less impurities can be efficiently recovered.

The used nonwoven fabric product includes at least one of a medical gown, a medical cap, and a mask having a nonwoven fabric as a material, in addition to the used absorbent article.

The present method is applicable not only to the used absorbent article such as disposable diapers, but also to at least one of a medical gown, a medical cap, and a mask having a nonwoven fabric as a material, which is included in the used nonwoven fabric product. Even in such a case, the impurities of the obtained plastic material can be suppressed, which makes it possible to expand the applications of the reuse of the plastic material.

The plastic material recovered in the secondary separation step is used for plastics to oil conversion.

In the present method, the plastic material recovered in the secondary separation step can be used for plastics to oil conversion. That is, the plastic material obtained by the present method is the plastic material having suppressed impurities, which makes it possible to expand the applications of the reuse to the plastics to oil conversion (a technology for producing a liquid product by decomposing a used plastic material using heat or a catalyst).

The present plastic material is the plastic material having suppressed impurities, which makes it possible to expand the applications of the reuse to various applications (e.g., the plastics to oil conversion).

Hereinafter, a method of recovering the plastic material from the used nonwoven fabric product including the used absorbent article according to the embodiment will be described. However, the used absorbent article includes an absorbent article used by a user or an unused but discarded absorbent article. Examples of the absorbent article include a disposable diaper, a urine collection pad, a sanitary napkin, a bed sheet, and a pet sheet. The used absorbent article includes an absorbent article in a state where an excrement of a user is absorbed and held. In addition, the used nonwoven fabric product includes a nonwoven fabric product used by a user or an unused but discarded nonwoven fabric product. The nonwoven fabric product is a product configured with a plurality of members including a nonwoven fabric and includes at least a nonwoven fabric made of a synthetic resin, that is, a plastic material. Examples of the nonwoven fabric product include a medical gown, a medical cap, a mask, and a wipe, in addition to the absorbent article described above. It should be noted that the nonwoven fabric product contains at least 50 mass% or more of the nonwoven fabric in the product.

First, a configuration example of the absorbent article will be described. The absorbent article includes a top sheet, a back sheet, and an absorbent body arranged between the top sheet and the back sheet. The size of the absorbent article is, for example, approximately 15 to 100 cm in length and 5 to 100 cm in width. It should be noted that the absorbent article may further include a different member included in a general absorbent article, for example, a diffusion sheet, a leakproof wall, a side sheet, an exterior sheet, or the like.

Examples of a constituent member of the top sheet include a liquid-permeable nonwoven fabric, a synthetic resin film having a liquid-permeating hole, a composite sheet thereof, and the like. Examples of a constituent member of the back sheet include a liquid-impermeable nonwoven fabric, a liquid-impermeable synthetic resin film, and a composite sheet thereof. Examples of a constituent member of the diffusion sheet include a liquid-permeable nonwoven fabric. Examples of a constituent member of the leakproof wall and the side sheet include a water-repellent nonwoven fabric, and the leakproof wall may include an elastic member such as rubber. Examples of a constituent member of the exterior sheet include a liquid-impermeable and breathable nonwoven fabric, a liquid-impermeable and breathable synthetic resin film, and a composite sheet thereof. The type of the nonwoven fabric is not particularly limited, and examples thereof include a meltblown nonwoven fabric, a spunbond nonwoven fabric, an air-laid nonwoven fabric, an airthrough nonwoven fabric, and the like. In addition, the type of the synthetic resin film is not particularly limited and a well-known film material can be used. Here, the material of the nonwoven fabric and the synthetic resin film is not particularly limited as long as the material can be used as absorbent articles, and examples thereof include olefin-based resins such as polyethylene and polypropylene, polyamide-based resins such as 6-nylon and 6,6-nylon, polyester-based resins such as polyethylene terephthalate (PET) and polybutylene terephthalate (PBT), and the like. The materials of the nonwoven fabric and synthetic resin film are a synthetic resin, and can be referred to as a plastic material. In the present disclosure, an absorbent article for which a film is used as the constituent member of the back sheet and a nonwoven fabric is used as the constituent member of the top sheet will be described as an example.

Examples of the constituent member of the absorbent body include absorbent body materials, that is, pulp fibers and superabsorbent polymers. Examples of the pulp fibers include cellulose-based fibers. Examples of the cellulose-based fibers include a wood pulp, a crosslinked pulp, a non-wood pulp, a recycled cellulose, a semi-synthetic cellulose, and the like. As the size of the pulp fiber, the average value of the long diameters of the fibers is, for example, several tens of micrometer and preferably 20 to 40 µm, and the average value of the fiber lengths is, for example, several millimeters and preferably 2 to 5 mm. Examples of the superabsorbent polymer (SAP) include polyacrylate-based, polysulfonate-based, and maleic anhydride-based water-absorbing polymers. As the size of the (dried) superabsorbent polymers, the average value of the particle sizes is, for example, several hundred micrometers and preferably 200 to 500 µm. The absorbent body may include a core wrap formed of a liquid-permeable sheet.

One surface and the other surface of the absorbent body are joined to the top sheet and the back sheet, respectively, via an adhesive. In a plan view, a portion (peripheral portion) of the top sheet which extends toward the outer side of the absorbent body so as to surround the absorbent body is joined to a portion (peripheral portion) of the back sheet which extends toward the outer side of the absorbent body so as to surround the absorbent body, via an adhesive. Therefore, the absorbent body is wrapped inside the joined body of the top sheet and the back sheet. The adhesive is not particularly limited, and examples thereof include a hot-melt adhesive. Examples of the hot-melt adhesive include pressure-sensitive adhesives or heat-sensitive adhesives mainly containing rubber such as styrene-ethylene-butadiene-styrene, styrene-butadiene-styrene, or styreneisoprene-styrene or mainly containing an olefin such as polyethylene.

In addition, configuration examples of a medical gown, a medical cap, a mask, and a wipe are as follows. The medical gown is not particularly limited as long as it includes a nonwoven fabric, and, for example, the medical gown includes a body portion formed of a nonwoven fabric to cover the body of the wearer, a sleeve portion formed of a nonwoven fabric to cover both arms of the wearer, and a string portion formed of a nonwoven fabric to fix the body portion to the body of the wearer. In addition, the medical cap is not particularly limited as long as it includes a nonwoven fabric, and for example, may include a crown portion formed of a nonwoven fabric to cover a head portion of the wearer, and a chin strap portion formed of a nonwoven fabric or the like to fix the crown portion to the head portion. Further, the mask is not particularly limited as long as it includes a nonwoven fabric, and, for example, includes a mask body portion formed of a nonwoven fabric to cover at least nose and mouth of the wearer, and a pair of ear hooks formed of a nonwoven fabric to fix the mask body portion to a front portion of the head of the wearer. The wipes include a sheet formed of one or a plurality of layers of the nonwoven fabric. As the nonwoven fabric (and the synthetic resin film) used in these products, any of the nonwoven fabric (and the synthetic resin film) described above can be used.

Next, the method of recovering the plastic material from the used nonwoven fabric product including the used absorbent article according to the disclosure will be described in detail. In the present disclosure, the absorbent article (e.g., a disposable diaper) will be described as an example of the nonwoven fabric product.

FIG. 1 is a flow chart illustrating the method of recovering the plastic material from the used nonwoven fabric product including the used absorbent article according to the disclosure. The present method further includes a primary separation step S2 and a secondary separation step S3 as the step of recovering the plastic material from the used nonwoven fabric product, and further includes a crushing step S1 and a dehydration and drying step S4 in the present disclosure. It should be noted that, in the present disclosure, the present method further includes a dust removal step S5 to a pulp fibers separating step S8. Hereinafter, each step will be described.

In the present disclosure, the used absorbent articles (the nonwoven fabric products) are collected from the outside for reuse (recycling). At this time, a plurality of used absorbent articles are enclosed in a collection bag, thereby suppressing leakage of an excrement, fungi, and odors to the outside. Each of the used absorbent articles in the collection bags is collected or the like in a state of being, mainly, rounded or folded such that the top sheet, onto which excrement is excreted, faces inward so as to prevent, for example, the excrement or the fungi from being exposed toward the surface and the odors from diffusing toward the surrounding. It should be noted that the used absorbent article may not be enclosed in the collection bag or may not be rolled.

The crushing step S1 is a step of crushing the used absorbent article (the nonwoven fabric product) in the inactivation aqueous solution. In the present disclosure, in the crushing step S1, the collection bag enclosing the used absorbent article is supplied to a solution tank storing an acidic aqueous solution that is the inactivation aqueous solution. The acidic aqueous solution containing the collection bag is delivered from the solution tank to a biaxial crusher (e.g., a biaxial rotary crusher, a biaxial differential crusher, and a biaxial shear crusher). The collection bag is entirely crushed by the biaxial crusher. As a result, the used absorbent article in the collection bag is crushed in the acidic aqueous solution together with the collection bag, thereby producing a crushed material. The crushed material is delivered to the primary separation step S2 alone or together with the acidic aqueous solution.

Here, it is preferable that, in the crushing step S1, the used absorbent article is crushed in a manner such that a size of the crushed material is approximately 25 to 150 mm. In a case where the size is set to 25 mm or more, materials other than the pulp fibers and the superabsorbent polymer (e.g., a film, nonwoven fabric, and elastic member) are largely cut, making it easier to separate the pulp fibers and the superabsorbent polymer from those materials in a subsequent step. In a case where the size is set to 150 mm or less, the materials of the used absorbent article are less likely to be entangled with each other. In a case where the size exceeds 150 mm, the materials are likely to be entangled with each other and are less likely to disaggregate from each other after they are entangled.

In a case where the used absorbent article is treated in the inactivation aqueous solution, the superabsorbent polymer which is or was contained in the used absorbent article inactivates and dehydrates to have a small particle size. This makes it easier to handle the superabsorbent polymer in subsequent steps, thereby enhancing the efficiency of the treatment. The reason for using the acidic aqueous solution, that is, an aqueous solution of an inorganic acid or an organic acid as the inactivation aqueous solution is that no ash remains in the plastic material or pulp fibers compared with an aqueous solution of lime, calcium chloride, or the like, and furthermore, it is easy to adjust the degree of inactivation (the magnitude of the particle sizes or the specific gravity) with the pH. The pH of the acidic aqueous solution is preferably 1.0 to 4.0. In a case where the pH is set to 1.0 or higher, equipment cannot be easily corroded, and alkaline chemicals required for a neutralization treatment during the wastewater treatment can be reduced. In a case where the pH is 4.0 or less, the superabsorbent polymer can be made small enough and the sterilization capability can be enhanced. Examples of the organic acid include citric acid, tartaric acid, glycolic acid, malic acid, succinic acid, acetic acid, ascorbic acid, and the like, and preferably include citric acid. The chelating effect of citric acid makes it possible to trap and remove a metal ion and the like in excrement, and the cleaning effect of citric acid makes it possible to expect a high dirt component removal effect. Examples of the inorganic acid include sulfuric acid, hydrochloric acid, and nitric acid, and sulfuric acid is preferable from the viewpoint of no chlorine contained, costs, or the like. Since the pH changes with the water temperature, the pH in the present invention is defined as the pH measured at an aqueous solution temperature of 20°C. The organic acid concentration of the organic acid aqueous solution is not particularly limited, but is preferably 0.5 mass% or higher and 4 mass% or lower in a case where the organic acid is citric acid. The inorganic acid concentration of the inorganic acid aqueous solution is not particularly limited, but is preferably 0.1 mass% or higher and 0.5 mass% or lower in a case where the inorganic acid is sulfuric acid. In the present disclosure, citric acid of an organic acid is used as the inactivation aqueous solution.

It should be noted that the used absorbent article put into the biaxial crusher may not be put in the collection bag. Alternatively, the collection bag enclosing the used absorbent article or the used absorbent article not contained in the collection bag may be put into the biaxial crusher without going through the solution tank. In addition, the crushing in the biaxial crusher may not be performed in the inactivation aqueous solution, and may be performed in the air, for example. In such a case, the primary separation step S2 that is a subsequent step is performed in the inactivation aqueous solution.

It should be noted that when a temperature of the inactivation aqueous solution is increased (temperature: 70°C to 95°C), the adhesive (e.g., the hot-melt adhesive) used for joining between the constituent members of the used absorbent article can be softened and a joining force of the adhesive can be reduced. This makes it possible to easily disaggregate the constituent members naturally or with a small impact. In addition, the used absorbent article can also be sterilized (disinfected).

As described above, in the crushing step S1, each constituent member in the used absorbent article is crushed to a substantially predetermined size. In addition, in a case where the joining force of the adhesive between the constituent members decreases due to heat generated during the crushing and/or heat of the inactivation aqueous solution, the constituent members are easily separated from each other.

Next, the primary separation step S2 is a step of separating the superabsorbent polymer and the pulp fibers from a mixture of the plastic material, the superabsorbent polymer, and the pulp fibers obtained by decomposing the used absorbent article (the nonwoven fabric product) in the inactivation aqueous solution. In the present disclosure, in the primary separation step S2, the mixture of the crushed material generated in the crushing step S1 and the acidic aqueous solution that is the inactivation aqueous solution is supplied to a pulper separator (the primary separation device). The pulper separator includes an agitated separation tank which functions as a washing tank and a sieving tank. In the pulper separator, the pulp fibers, the superabsorbent polymer, the excrement, and the acidic aqueous solution are separated (removed) from the mixture of the crushed material and the acidic aqueous solution by a screen, while the mixture is agitated and washed to remove dirt from the crushed material. That is, the pulp fibers, the superabsorbent polymer, the excrement, and the acidic aqueous solution pass through the screen, are separated from the mixture, and are delivered from the pulper separator. On the other hand, the remaining mixture, that is, other materials (e.g., the collection bag, a film, and the nonwoven fabric) cannot pass through the screen and remain in the pulper separator. Then, the other materials are delivered to the secondary separation step S3 by fixed amounts per unit time by a screw conveyor. It should be noted that some of the other materials can pass through the screen.

However, some of the pulp fibers, the superabsorbent polymer, the excrement, and the acidic aqueous solution can remain in the mixture. In addition, the collection bag, the film, the nonwoven fabric, and the like which are other materials of the mixture are made of a synthetic resin, and can be referred to as a plastic material. Therefore, in the primary separation step S2, the plastic material and a small amount of a residue (the pulp fibers, the superabsorbent polymer, the excrement, and the acidic aqueous solution), which are the mixture, become residues on the screen, and the pulp fibers, the superabsorbent polymer, the excrement, and the acidic aqueous solution separated from the mixture, become a material which has passed through the screen.

In the present disclosure, the primary separation step S2 is performed in one of two primary separation devices connected in parallel. For example, in a case where two pulper separators are connected in parallel, one pulper separator is operated, and the one pulper separator needs to go through maintenance or the like, then, the one pulper separator is stopped and the other pulper separator is operated. Accordingly, the primary separation step S2 can be continuously performed. It should be noted that three or more primary separation devices may be connected in parallel.

In the present disclosure, in the primary separation step S2, the pH of the acidic aqueous solution is adjusted so as to be maintained within a predetermined range. The predetermined range of pH refers to a range where a variation of pH is within ± 1.0. This makes it possible to make a difference between a specific gravity and a size of the superabsorbent polymer and a specific gravity and a size of the pulp fibers fall within a predetermined range. In this case, the difference in the predetermined range is, for example, a range where one is 0.2 to 5 times the other. Therefore, the difference between the pulp fibers and the superabsorbent polymer is that the specific gravity is within a predetermined range and the size is within a predetermined range. Due to that, the pulp fibers and the superabsorbent polymer can be easily separated from other materials (mainly the plastic material) excluding the pulp fibers and the superabsorbent polymer among the materials of the used absorbent article, by using the difference in size and specific gravity. The pH can be adjusted by using an acidic aqueous solution or an alkaline aqueous solution based on the pH value measured by a pH sensor. It should be noted that, in the secondary separation step S3 as well, the pH may be adjusted in the same manner as in the primary separation step S2.

In addition, in a case where the inactivation aqueous solution (the acidic aqueous solution) is used in the crushing step S1, the pH of the acidic aqueous solution may be adjusted in the same manner as in the primary separation step S2.

Next, in the secondary separation step S3, the physical impact is applied while spraying the oxidizing agent acidic aqueous solution on the mixture in the air, thereby separating the superabsorbent polymer and the pulp fibers which have remained without being separated from the plastic material in the primary separation step and recovering the plastic material.

In the present disclosure, in the secondary separation step S3, the mixture (a residue: the plastic material and the residue) from which the pulp fibers and the superabsorbent polymer were separated in the primary separation step S2 is supplied to the separation device. The separation device includes a cylindrical portion provided sideways, a plurality of impellers provided in the cylindrical portion, a plurality of oxidizing agent aqueous solution supply portions provided on an outer circumferential surface of an upper side of the cylindrical portion, and a screen (a sieve) provided on an outer circumferential surface of a lower side of the cylindrical portion. A mixture supply port is provided on one end side of the cylindrical portion and a discharge port is provided on the other end side. The plurality of impellers are arranged along an axial direction of the cylindrical portion so as to generate a flow of air from one end side to the other end side of the cylindrical portion while rotating around an axis of the cylindrical portion. The plurality of oxidizing agent aqueous solution supply portions are arranged along the axial direction. A size of each opening of the screen (the sieve) is a size through which the pulp fibers and the superabsorbent polymer can pass through and a size through which the plastic material is difficult to pass through.

The mixture is agitated with the impeller blade that rotates in the cylindrical portion while spraying the oxidizing agent aqueous solution on the mixture from the oxidizing agent aqueous solution supply portion in the air in the cylindrical portion, and the mixture moves from the one end side to the other end side of the cylindrical portion while applying the physical impact to the mixture by collision of the impeller blade. In the meantime, the mixture is washed (including sterilization and bleaching) for removal of the dirt by the sprayed oxidizing agent aqueous solution while being moved (flowing) in the air. At the same time, the pulp fibers, the superabsorbent polymer, and the like in the mixture are removed from the plastic material in the mixture by physical impact and oxidative decomposition of the superabsorbent polymer with an oxidizing agent, and are separated (removed) together with the oxidizing agent aqueous solution through a screen on the lower side of the cylindrical portion. On the other hand, the plastic material in the mixture from which the pulp fibers, the superabsorbent polymer, and the like are removed is discharged from the discharge port on the other end side of the cylindrical portion without passing through the screen. That is, the superabsorbent polymer and the pulp fibers, which remain without being separated in the primary separation step S2, are separated from the plastic material, thereby producing and recovering the plastic material having suppressed impurities. It should be noted that since the secondary separation step S3 is performed in the air, the dehydration of the plastic material proceeds. In addition, the separated oxidizing agent aqueous solution may be reused in the oxidizing agent treatment step S7 (which will be described later).

Here, the oxidizing agent aqueous solution is an aqueous solution containing the oxidizing agent. The oxidizing agent contains at least one of ozone, chlorine dioxide, peracetic acid, sodium hypochlorite, and hydrogen peroxide. In the present disclosure, ozone is used as the oxidizing agent from a viewpoint of oxidizing power, sterilizing power, or bleaching power. In such a case, it is preferable that the oxidizing agent aqueous solution is acidic. The reason for this is to suppress the deactivation of ozone and to maintain the inactivation of the superabsorbent polymer. In addition, in a case where the acidic aqueous solution such as a citric acid aqueous solution is used as the inactivation aqueous solution in the crushing step S1 or the primary separation step S2, the above reason is also from a viewpoint of continuity of each step and from a viewpoint of being able to use the aqueous solution without any waste. It should be noted that, in a case where the plastic material finally obtained by the present method is used for an application in which residual chlorine is not preferable, sodium hypochlorite is not used as the oxidizing agent. In addition, in a case of reusing the oxidizing agent aqueous solution separated in the secondary separation step S3 in the oxidizing agent treatment step S7 (which will be described later), or in a case of using the pulp fibers or the superabsorbent polymer for a sanitary material application, sodium hypochlorite is not used as the oxidizing agent, in order to suppress the residual chlorine in the pulp fibers.

An ozone concentration in the oxidizing agent aqueous solution is not particularly limited as long as it is a concentration capable of realizing a desired function, that is, the oxidizing power, sterilizing power, and bleaching power, and is, for example, 0.2 to 10 mass ppm and preferably 0.5 to 5 mass ppm. In a case where the concentration is not excessively low, a desired function can be exhibited, and in a case where the concentration is not excessively high, corrosion of an apparatus can be suppressed. A treatment time in the oxidizing agent aqueous solution is not particularly limited as long as it is time capable of exhibiting the desired function, and the treatment time is short in a case where the ozone concentration in the oxidizing agent aqueous solution is high, is long in a case where the ozone concentration is low, and is typically 1 to 10 minutes. A product of the ozone concentration (ppm) in the oxidizing agent aqueous solution and the treatment time (min) of the treatment step (hereinafter, also referred to as a "CT value") is, for example, 0.5 to 10 ppm·min and is preferably 1 to 5 ppm·min. In a case where the CT value is not excessively small, a desired function can be exhibited, and in a case where the CT value is not excessively large, corrosion of an apparatus can be suppressed. It should be noted that, as the oxidizing agent aqueous solution, the oxidizing agent aqueous solution used in the oxidizing agent treatment step S7 which will be described later may be reused in this step while reducing the concentration.

Regarding sterilization or disinfection, for example, 1 billion or more general bacteria/ml exist in used paper diapers, and it cannot be said that the sterilization is completed in the acidic aqueous solution in the primary separation step S2. Accordingly, a certain amount of general bacteria exists (e.g., 3,400 general bacteria/ml) in the plastic material (to which a small amount of pulp fibers and superabsorbent polymer are attached) separated in the primary separation step S2. The same also applies to a case where the secondary separation step S3 is performed without using the oxidizing agent aqueous solution. In such a case, there can be a risk of an adverse influence on the safety of operators or the generation of decay or mold in the taken-out plastic material. There is also a strong excrement odor, which may be caused by general bacteria. However, the secondary separation step S3 using the oxidizing agent aqueous solution is performed, which makes it possible to remove general bacteria in the plastic material to a detection limit or lower as in E. coli, and reduce the excrement odor to an unrecognizable extent.

Next, the dehydration and drying step S4 may be performed. The dehydration and drying step S4 is a step of dehydrating and/or drying the separated plastic material. In the present disclosure, a step of drying the plastic material in a high-temperature atmosphere or hot air in a thermostatic tank is performed. The drying temperature is, for example, 80°C to 120°C. A drying time depends on the drying temperature, and is, for example, 10 to 120 minutes and preferably 15 to 100 minutes. This makes it possible not only to evaporate and remove moisture that remains in the plastic material, but also to sterilize the plastic material. Due to that, this makes it possible to exhibit a sterilizing (disinfecting) effect while removing the moisture.

As described above, in the present method, more of the superabsorbent polymer and the pulp fibers are separated and removed from the plastic material by the secondary separation step S3, which makes it possible to recover the plastic material having decreased impurities. Among the impurities contained in the plastic material, a proportion of the pulp fibers and the superabsorbent polymer is 5 mass% or less, preferably 3 mass% or less, and a proportion of ash is less than 10 mass%, preferably 5 mass%, and more preferably 3 mass% or less. In addition, since the sterilization is performed with the oxidizing agent, almost no bacteria exist. Such a low-impurity plastic material can be used for a variety of applications for reuse. Such applications include, for example, the plastics to oil conversion which is a technology for producing a liquid product by decomposing the used plastic material using heat or a catalyst.

In the present method, firstly, in the primary separation step S2, most of the superabsorbent polymer and the pulp fibers are separated from the mixture of the plastic material (the film, the nonwoven fabric, or the like), the superabsorbent polymer, and the pulp fibers, while inactivating, dehydrating, and suppressing swelling of the superabsorbent polymer with the inactivation aqueous solution (e.g., the acidic aqueous solution). In the secondary separation step S3, the remaining superabsorbent polymer and pulp fibers are separated from the plastic material while applying a physical impact to the mixture while dispersing the oxidizing agent aqueous solution (e.g., an ozone aqueous solution) in the air, thereby recovering the plastic material.

As described above, in the secondary separation step S3, the oxidizing agent aqueous solution is sprayed on the mixture, which makes it possible to oxidatively decompose and solubilize at least a part of a surface of the superabsorbent polymer which remains in the mixture. Therefore, the superabsorbent polymer attached to the plastic material and the pulp fibers attached through the superabsorbent polymer can be easily removed from the plastic material. Also, the mixture can be washed with the oxidizing agent aqueous solution to sterilize, disinfect, and deodorize the mixture. In addition, the physical impact is applied to the mixture not in water (solution), but in the air, which makes it possible for the physical impact to be directly applied to the plastic material, the superabsorbent polymer, and the pulp fibers. Accordingly, the superabsorbent polymer and the pulp fibers attached to the plastic material can be easily detached from the plastic material. Therefore, these synergistic effects make it possible to easily separate the superabsorbent polymer and the pulp fibers from the mixture (the plastic material), which makes it possible to suppress the impurities in the obtained plastic material. Thus, the applications of the reuse of the plastic material can be expanded.

In the present method, it is preferable that, the oxidizing agent aqueous solution is an aqueous solution containing at least one of ozone, chlorine dioxide, peracetic acid, sodium hypochlorite, and hydrogen peroxide. Accordingly, a surface of the superabsorbent polymer remaining in the mixture can be more appropriately decomposed, and the superabsorbent polymer remaining in the mixture and the pulp fibers attached to the superabsorbent polymer can be more easily removed from the plastic material. Also, the mixture can be more appropriately sterilized, disinfected, and deodorized. In particular, ozone is preferable because of its high effect.

In the present method, it is preferable that, before the primary separation step S2, the used nonwoven fabric product in the inactivation aqueous solution is crushed to a predetermined size, thereby crushing the plastic material, the superabsorbent polymer, and the pulp fibers to a predetermined size (the crushing step S1). That is, the plastic material, the superabsorbent polymer, and the pulp fibers can be set to have a size, with which the separation is easily performed in the primary separation step and the secondary separation step, while inactivating, dehydrating, and suppressing swelling of the superabsorbent polymer in the inactivation aqueous solution. Therefore, the superabsorbent polymer and the pulp fibers can be more easily separated from the mixture (the plastic material).

In the present method, it is preferable that, in the primary separation step S2, the inactivation aqueous solution is an acidic aqueous solution, and the superabsorbent polymer and the pulp fibers are separated from the mixture while maintaining the pH of the acidic aqueous solution within a predetermined range. Accordingly, in the primary separation step, most of the superabsorbent polymer and the pulp fibers are separated from the mixture, while more reliably inactivating, dehydrating, and suppressing swelling of the superabsorbent polymer with the inactivation aqueous solution. Therefore, the amount of the superabsorbent polymer and the pulp fibers which are the target to be separated in the secondary separation step can be decreased, which makes it possible to more easily separate the superabsorbent polymer and the pulp fibers from the mixture (the plastic material).

In the present method, it is preferable that, the physical impact is applied to the mixture by the collision of a rotating blade on an impeller that agitates the mixture in air. Accordingly, the physical impact can be more reliably applied to the mixture in the air. Therefore, the superabsorbent polymer remaining in the mixture and the pulp fibers attached to the superabsorbent polymer can be more easily removed from the plastic material.

In a primary separation device which performs the primary separation step S2, clogging of a material to be separated may occur because it is an initial separation. Accordingly, in the present method, it is preferable that, the primary separation step S2 is performed by one of two primary separation devices connected in parallel. Therefore, for example, in a case where maintenance is required for one primary separation device during an operation, the one primary separation device is stopped and the other primary separation device is operated, which makes it possible to continuously perform the present method without temporarily stopping the operation. Thus, the plastic material having less impurities can be efficiently recovered.

It is preferable that the present method is applicable not only to the used absorbent article such as disposable diapers, but also to at least one of a medical gown, a medical cap, and a mask having a nonwoven fabric as a material, which is included in the used nonwoven fabric product. Even in such a case, the impurities of the obtained plastic material can be suppressed, which makes it possible to expand the applications of the reuse of the plastic material.

In the present method, it is preferable that, the plastic material recovered in the secondary separation step S3 can be used for plastics to oil conversion. That is, the plastic material obtained by the present method is the plastic material having suppressed impurities, which makes it possible to expand the applications of the reuse to the plastics to oil conversion (a technology for producing a liquid product by decomposing a used plastic material using heat or a catalyst).

Although the present plastic material is a plastic material derived from a used nonwoven fabric product including a used absorbent article, a proportion of pulp fibers and a superabsorbent polymer contained in the plastic material is 5 mass% or less, and a proportion of ash contained in the plastic material is less than 10 mass%. That is, the present plastic material is the plastic material having suppressed impurities, which makes it possible to expand the applications of the reuse to various applications (e.g., the plastics to oil conversion).

In addition, in the present disclosure, as shown in FIG. 1, the present method further includes a dust removal step S5, an SAP separation step S6, the oxidizing agent treatment step S7, and a pulp fibers separation step S8 as a step of separately recovering the pulp fibers and the superabsorbent polymer (SAP) from the used nonwoven fabric product.

In the present disclosure, a liquid mixture containing the pulp fibers, the superabsorbent polymer, the excrement, and the acidic aqueous solution separated in the primary separation step S2 is treated in the dust removal step S5. It should be noted that the pulp fibers, the superabsorbent polymer, and the like separated in the secondary separation step S3 may be mixed with the liquid mixture described above and treated in the dust removal step S5.

In the dust removal step S5, at least one separator (e.g., a screen separator or cyclone separator) separates foreign matters such as other materials (the collection bag, film, nonwoven fabric, elastic member, and the like) from the liquid mixture described above supplied from the primary separation step S2 (and the secondary separation step S3). In the present disclosure, in the dust removal step S5, the screen separator (having a relatively large opening), the screen separator (having a relatively small opening), and the cyclone separator are arranged in this order, and foreign matters are sequentially separated from the liquid mixture. Accordingly, the pulp fibers and the superabsorbent polymer having a small amount of foreign matters are obtained. The liquid mixture of the pulp fibers and superabsorbent polymer having a small amount of foreign matters and the acidic aqueous solution (containing an excrement) is supplied to the SAP separation step S6.

In the SAP separation step S6, at least one separator (e.g., a drum screen separator) separates the superabsorbent polymer from the liquid mixture (containing the pulp fibers and superabsorbent polymer having a small amount of the foreign matters) supplied from the dust removal step S5. In the present disclosure, in the SAP separation step S6, the superabsorbent polymer and the acidic aqueous solution (containing an excrement) are separated from the liquid mixture by the drum screen separator. Accordingly, the superabsorbent polymer having a small amount of foreign matters and the acidic aqueous solution are obtained. The superabsorbent polymer is separated and removed from the acidic aqueous solution (a liquid) by another separator (e.g., an inclined screen separator). On the other hand, the pulp fibers containing a small amount of foreign matters (but containing a small amount of the superabsorbent polymer) is supplied to the oxidizing agent treatment step S7.

In the oxidizing agent treatment step S7, the superabsorbent polymer in the pulp fibers having a small amount of foreign matters (containing a small amount of the superabsorbent polymer) supplied from the SAP separation step S6 is oxidatively decomposed by the oxidizing agent aqueous solution, solubilized, and removed from the pulp fibers. In the present disclosure, in the oxidizing agent treatment step S7, the pulp fibers are put into a treatment tank that stores an oxidizing agent aqueous solution containing ozone as an oxidizing agent, the superabsorbent polymer in the pulp fibers is oxidatively decomposed, and solubilized, which makes it possible to obtain pulp fibers having an extremely small amount of impurities. The pulp fibers having a small amount of impurities (containing the superabsorbent polymer) are supplied to the pulp fibers separation step S8 together with the oxidizing agent aqueous solution.

The type of the oxidizing agent in the oxidizing agent treatment step S7 is the same as the oxidizing agent in the secondary separation step S3. In the present disclosure, ozone is used as the oxidizing agent from a viewpoint of oxidizing power, sterilizing power, or bleaching power. The ozone concentration in the oxidizing agent aqueous solution is not particularly limited as long as it is high enough to decompose the superabsorbent polymer, and is, for example, preferably 10 to 50 mass ppm. The concentration is not excessively low, which makes it possible to completely solubilize the superabsorbent polymer, and in a case where the concentration is not excessively high, a damage on the pulp fibers is not caused. A treatment time in the oxidizing agent aqueous solution is not particularly limited as long as it is time capable of decomposing the superabsorbent polymer, and the treatment time is short in a case where the ozone concentration in the oxidizing agent aqueous solution is high, is long in a case where the ozone concentration is low, and is typically 5 to 120 minutes. The product of the ozone concentration (ppm) in the oxidizing agent aqueous solution and the treatment time (minutes) of the treatment step (hereinafter, also referred to as "CT value") is preferably 100 to 6000 ppm·minute. When the CT value is too small, the superabsorbent polymers cannot be completely solubilized, and there is a risk that the superabsorbent polymers may remain in the pulp fibers. When the CT value is too large, there is a risk that the pulp fibers may be damaged.

In the pulp fibers separation step S8, the pulp fibers are separated from the pulp fibers and the oxidizing agent aqueous solution supplied from the oxidizing agent treatment step S7 by the separator (e.g., the screen separator). The pulp fibers separated and recovered by doing so are socalled recycled pulp fibers. The recycled pulp fibers are cleaned with cleaning water and taken out. Examples

Hereinafter, the present invention will be described based on examples, but the present invention is not limited to the examples.

### (1) Sample

The method shown in FIG. 1 was performed using an unused "used disposable diaper" as a raw material, and the plastic material was recovered after the completion of the primary separation step S2 and after the completion of the secondary separation step S3. However, the ozone concentration and the treatment time (the CT value) in the secondary separation step S3 were set to 1 ppm × 2 minutes (2 ppm·min).

### (2) Evaluation Method

For each of the primary separation step S2 and the secondary separation step S3 (including the case where ozone is not used), the amount of residual pulp fibers attached to and remaining in the plastic (mass%), the amount of residual superabsorbent polymer attached to and remaining in the plastic (mass%), and the amount of residual ash (mass%) were evaluated.

Each calculation method is as follows.

### (a) Amount of residual pulp fibers (mass%) and amount of residual superabsorbent polymer (mass%)

### <Method of measuring residual amount after primary separation step>

In the primary separation step, the plastic material from which the pulp fibers and the superabsorbent polymer are separated is dried (120°C × 60 minutes), and approximately 1 kg is weighed (a measured value A) to obtain a sample α1. Next, the sample α1 is adjusted to an aqueous solution having a solid concentration of 1wt%, and an ozone gas is blown while agitating, such that the ozone treatment is performed. The ozone concentration and the treatment time in the aqueous solution are set to 50 ppm × 30 minutes (the CT value of 1500) (the superabsorbent polymer is decomposed, solubilized, and removed). Next, a sample α2 obtained by solid-liquid separation of the ozone aqueous solution is dried (120°C × 60 minutes) and weighed (a measured value A'). Due to that, |A'-A| is a residual mass D of the remaining superabsorbent polymer. On the other hand, the sample α2 is immersed in toluene, and the adhesive (HMA) is dissolved to separate the pulp fibers and the plastic material. Next, a result obtained by drying (60 minutes) and weighing the pulp fibers in a draft chamber is a residual mass C of the pulp fibers. A mass B of the plastic material itself is calculated by A-D-C.

Therefore, $Plastic material \left(mass%\right) = B / A \times 100$ $Pulp fibers \left(mass%\right) = C / A \times 100$ $Superabsorbent polymer \left(mass%\right) = D / A \times 100 ;$

### <Method of measuring residual amount after secondary separation step>

The amount of residue after the secondary separation step is also the same as the method of measuring the amount of residue after the primary separation step.

### (b) Amount of residual ash (mass%)

The ash refers to the amount of inorganic substance or non-combustible residue remaining after the organic substance is ashed, and the amount of the residual ash (mass%), that is, an ash content refers to a proportion (mass ratio) of the ash contained in a sample to be measured. The ash content is measured according to "5. Ash content test method" of "2. General test method" of the material standard for menses treatment products. Specifically, the ash content is measured as follows.
(i) A platinum, quartz, or porcelain crucible (including a lid) is preheated at 500°C to 550°C for 1 hour, allowed to cool, and then the mass thereof is precisely weighed.
(ii) 2 to 4 g of the plastic material dried at 120°C for 60 minutes is collected and put into a crucible, and a mass thereof is accurately weighed.
(iii) The lid of the crucible is removed or shifted as necessary, the sample is weakly heated in the beginning, a temperature is gradually increased to ignite the sample at 500°C to 550°C for 4 hours or longer to ash the sample until no carbide remains.
(iv) After being allowed to cool, the mass of crucible is weighed precisely. The residue is ashed again to a constant weight, allowed to cool, and then the mass of the crucible is precisely weighed. The ash content (mass%) is calculated based on the measured values of (1), (2), and (4).

### (3) Evaluation results

Among those separated as plastic material after the primary separation step S2, a proportion (residual amount) of pulp fibers was approximately 25 mass%, and a proportion (residual amount) of the superabsorbent polymer was approximately 10 mass%, and thus they were more than 5 mass%. The proportion (residual amount) of the ash was 12.3 mass % and was more than 10 mass%.

Among those separated as the plastic material after the secondary separation step S3, a proportion of pulp fibers was approximately 3 mass%, and a proportion of the superabsorbent polymer was approximately 1 mass%, and thus they were 5 mass% or less. The proportion of the ash was approximately 7 mass% and 10 mass% or less.

Therefore, the secondary separation step S3 is added, which makes it possible to remarkably reduce the pulp fibers, the superabsorbent polymer, and the ash, that is, the impurities, contained in the plastic material.

### REFERENCE SIGNS LIST

- S2:: Primary separation step
- S3:: Secondary separation step

## Claims

1. A method of recovering a plastic material from a used nonwoven fabric product including a used absorbent article, in which the used nonwoven fabric product includes a plastic material and the used absorbent article includes a superabsorbent polymer and pulp fibers, the method comprising:
a primary separation step (S2) of separating the superabsorbent polymer and the pulp fibers from a mixture of the plastic material, the superabsorbent polymer and the pulp fibers obtained by decomposing the used nonwoven fabric product, in an inactivation aqueous solution; and
a secondary separation step (S3) of recovering the plastic material by separating the superabsorbent polymer and the pulp fibers remaining without being separated in the primary separation step from the plastic material by applying a physical impact while spraying an oxidizing agent aqueous solution on the mixture in an air.

2. The method according to claim 1, wherein
the oxidizing agent aqueous solution is an aqueous solution containing at least one of ozone, chlorine dioxide, peracetic acid, sodium hypochlorite and hydrogen peroxide.

3. The method according to claim 1 or 2, further comprising:
a crushing step (S1) of crushing the used nonwoven fabric product in an inactivation aqueous solution, wherein
the primary separation step (S2) includes a step of separating the superabsorbent polymer and the pulp fibers from the mixture in the used nonwoven fabric product crushed in the crushing step.

4. The method according to any one of claims 1 to 3, wherein
in the primary separation step (S2),
the inactivation aqueous solution is an acidic aqueous solution, and
the superabsorbent polymer and the pulp fibers are separated from the mixture while a pH of the acidic aqueous solution is maintained within a predetermined range.

5. The method according to any one of claims 1 to 4, wherein
the physical impact is applied to the mixture by a collision of a rotating blade in an impeller which agitates the mixture in the air.

6. The method according to any one of claims 1 to 5, wherein
the primary separation step (S2) is performed by one of two primary separation devices connected in parallel.

7. The method according to any one of claims 1 to 6, wherein
the used nonwoven fabric product includes at least one of a medical gown, a medical cap and a mask having a nonwoven fabric as a material, in addition to the used absorbent article.

8. The method according to any one of claims 1 to 7, wherein
the plastic material recovered in the secondary separation step (S3) is used for plastics to oil conversion.

9. A plastic material derived from a used absorbent article, the plastic material being recovered by the method according to any one of claims 1 to 8, wherein
a proportion of pulp fibers and a superabsorbent polymer contained in the plastic material is 5 mass% or less, and
a proportion of ash contained in the plastic material is less than 10 mass%.

10. Use of a recovered plastic material in a plastic to oil conversion, the plastic material being recovered from a used absorbent article according to the method of any of claims 1 to 8 such that general bacteria is removed to a detection limit or lower.

## Patentansprüche

1. Verfahren zur Rückgewinnung eines Kunststoffmaterials aus einem benutzten Vliesstoffprodukt, das einen benutzten absorbierenden Artikel einschließt, wobei das benutzte Vliesstoffprodukt ein Kunststoffmaterial einschließt und der benutzte absorbierende Artikel ein superabsorbierendes Polymer und Zellstofffasern einschließt, wobei das Verfahren Folgendes umfasst:
einen primären Trennschritt (S2) des Trennens des superabsorbierenden Polymers und der Zellstofffasern aus einer Mischung des Kunststoffmaterials, wobei das superabsorbierende Polymer und die Zellstofffasern durch Zersetzen des benutzten Vliesstoffprodukts erhalten werden, in einer wässrigen Inaktivierungslösung; und
einen sekundären Trennschritt (S3) des Rückgewinnens des Kunststoffmaterials durch Trennen des superabsorbierenden Polymers und der Zellstofffasern, die unabgetrennt in dem primären Trennschritt verbleiben, von dem Kunststoffmaterial durch Anwenden einer physischen Einwirkung, während eine wässrige Oxidationsmittellösung auf die Mischung in einer Luft gesprüht wird.

2. Verfahren nach Anspruch 1, wobei
die wässrige Oxidationsmittellösung eine wässrige Lösung ist, die mindestens eines von Ozon, Chlordioxid, Peressigsäure, Natriumhypochlorit und Wasserstoffperoxid enthält.

3. Verfahren nach Anspruch 1 oder 2, das weiter Folgendes umfasst:
einen Zerkleinerungsschritt (S1) des Zerkleinerns des benutzten Vliesstoffprodukts in einer wässrigen Inaktivierungslösung, wobei
der primäre Trennschritt (S2) einen Schritt des Trennens des superabsorbierenden Polymers und der Zellstofffasern aus der Mischung in dem benutzten Vliesstoffprodukt, das in dem Zerkleinerungsschritt zerkleinert wird, einschließt.

4. Verfahren nach einem der Ansprüche 1 bis 3, wobei
in dem primären Trennschritt (S2)
die wässrige Inaktivierungslösung eine wässrige saure Lösung ist und
das superabsorbierende Polymer und die Zellstofffasern aus der Mischung abgetrennt werden, während ein pH der wässrigen sauren Lösung innerhalb eines vorgegebenen Bereichs aufrechterhalten wird.

5. Verfahren nach einem der Ansprüche 1 bis 4, wobei
die physische Einwirkung auf die Mischung durch einen Zusammenstoß eines rotierenden Flügels in einem Flügelrad, der die Mischung in der Luft bewegt, angewendet wird.

6. Verfahren nach einem der Ansprüche 1 bis 5, wobei
der primäre Trennschritt (S2) durch eine von zwei primären Trennvorrichtungen, die parallel verbunden sind, durchgeführt wird.

7. Verfahren nach einem der Ansprüche 1 bis 6, wobei
das benutzte Vliesstoffprodukt mindestens eines eines medizinischen Kittels, einer medizinischen Haube und einer Maske, die einen Vliesstoff als ein Material aufweisen, zusätzlich zu dem benutzten absorbierenden Artikel einschließt.

8. Verfahren nach einem der Ansprüche 1 bis 7, wobei
das Kunststoffmaterial, das in dem sekundären Trennschritt (S3) zurückgewonnen wird, zur Umwandlung von Kunststoffen in Öl verwendet wird.

9. Kunststoffmaterial, das aus einem benutzten absorbierenden Artikel stammt, wobei das Kunststoffmaterial durch das Verfahren nach einem der Ansprüche 1 bis 8 zurückgewonnen wird, wobei
ein Anteil an Zellstofffasern und eines superabsorbierenden Polymers, der in dem Kunststoffmaterial enthalten ist, 5 Masse-% oder weniger beträgt und
ein Anteil an Asche, der in dem Kunststoffmaterial enthalten ist, weniger als 10 Masse-% beträgt.

10. Verwendung eines zurückgewonnenen Kunststoffmaterials in einer Umwandlung von Kunststoff in Öl, wobei das Kunststoffmaterial aus einem benutzten absorbierenden Artikel gemäß dem Verfahren nach einem der Ansprüche 1 bis 8 zurückgewonnen wird, sodass allgemeine Bakterien bis zu einer Nachweisgrenze oder niedriger entfernt sind.

## Revendications

1. Procédé de récupération d'une matière plastique en provenance d'un produit textile non tissé usagé comprenant un article absorbant usagé, dans lequel le produit textile non tissé usagé comprend une matière plastique et l'article absorbant usagé comprend un polymère superabsorbant et des fibres de pâte à papier, le procédé comportant :
une étape de séparation primaire (S2) consistant à séparer le polymère superabsorbant et les fibres de pâte à papier en provenance d'un mélange constitué à partir de la matière plastique, du polymère superabsorbant et des fibres de pâte à papier que l'on obtient par décomposition du produit textile non tissé usagé, dans une solution aqueuse d'inactivation ; et
une étape de séparation secondaire (S3) consistant à récupérer la matière plastique en séparant le polymère superabsorbant et les fibres de pâte à papier qui restent sans être séparées de la matière plastique au cours de l'étape de séparation primaire par l'application d'un impact physique tout en pulvérisant une solution aqueuse d'agent oxydant sur le mélange dans un air.

2. Procédé selon la revendication 1, dans lequel
la solution aqueuse d'agent oxydant est une solution aqueuse contenant au moins l'un parmi de l'ozone, du dioxyde de chlore, de l'acide peracétique, de l'hypochlorite de sodium et du peroxyde d'hydrogène.

3. Procédé selon la revendication 1 ou la revendication 2, comportant par ailleurs :
une étape de broyage (S1) consistant à broyer le produit textile non tissé usagé dans une solution aqueuse d'inactivation, dans lequel
l'étape de séparation primaire (S2) comprend une étape consistant à séparer le polymère superabsorbant et les fibres de pâte à papier en provenance du mélange dans le produit textile non tissé usagé broyé au cours de l'étape de broyage.

4. Procédé selon l'une quelconque des revendications 1 à 3, dans lequel
au cours de l'étape de séparation primaire (S2),
la solution aqueuse d'inactivation est une solution aqueuse acide, et
le polymère superabsorbant et les fibres de pâte à papier sont séparés en provenance du mélange tandis que le pH de la solution aqueuse acide est maintenu dans les limites d'une plage prédéterminée.

5. Procédé selon l'une quelconque des revendications 1 à 4, dans lequel
l'impact physique est appliqué sur le mélange par une collision d'une aube rotative dans une roue qui agite le mélange dans l'air.

6. Procédé selon l'une quelconque des revendications 1 à 5, dans lequel
l'étape de séparation primaire (S2) est effectuée par l'un de deux dispositifs de séparation primaire connectés en parallèle.

7. Procédé selon l'une quelconque des revendications 1 à 6, dans lequel
le produit textile non tissé usagé comprend au moins l'un parmi une blouse médicale, un calot médical et un masque ayant un textile non tissé comme matériau, en plus de l'article absorbant usagé.

8. Procédé selon l'une quelconque des revendications 1 à 7, dans lequel
la matière plastique récupérée au cours de l'étape de séparation secondaire (S3) est utilisée pour convertir les matières plastiques en huile.

9. Matière plastique dérivée d'un article absorbant usagé, la matière plastique étant récupérée par le procédé selon l'une quelconque des revendications 1 à 8, dans laquelle
une proportion des fibres de pâte à papier et d'un polymère superabsorbant contenus dans la matière plastique est inférieure ou égale à 5 % en masse, et
une proportion de cendres contenues dans la matière plastique est inférieure à 10 % en masse.

10. Utilisation d'une matière plastique récupérée dans une conversion de matière plastique en huile, la matière plastique étant récupérée en provenance d'un article absorbant usagé selon le procédé selon l'une quelconque des revendications 1 à 8 de telle sorte que les bactéries générales sont éliminées à une limite de détection ou à une limite inférieure à celle-ci.
